(19) Europäisches Patentamt
European Patent Office
Office européen des brevets

(11) **EP 4 564 051 B1**

(12) **EUROPEAN PATENT SPECIFICATION**

(45) Date of publication and mention
of the grant of the patent:
**12.11.2025 Bulletin 2025/46**

(21) Application number: **23213589.7**

(22) Date of filing: **01.12.2023**

(51) International Patent Classification (IPC):
*G01S 7/481* (2006.01)      *G01S 7/487* (2006.01)
*G06T 9/40* (2006.01)      *H03M 7/30* (2006.01)
*H04N 19/597* (2014.01)

(52) Cooperative Patent Classification (CPC):
**H03M 7/4018; G01S 7/4817; G01S 7/487;
G01S 17/89; G01S 17/931; G06T 9/005;
H03M 7/3079; H03M 7/4043;** H04N 19/597

(54) **ENCODING AND DECODING OF LIDAR DATA FRAMES**

KODIERUNG UND DEKODIERUNG VON LIDAR-DATENRAHMEN

CODAGE ET DÉCODAGE DE TRAMES DE DONNÉES LIDAR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**04.06.2025 Bulletin 2025/23**

(73) Proprietor: **Axis AB
223 69 Lund (SE)**

(72) Inventors:
• **Toresson, Alexander
223 69 LUND (SE)**

• **Edpalm, Viktor
223 69 LUND (SE)**
• **Jonsson, Axel
223 69 LUND (SE)**
• **Antonsson, Jakob
223 69 LUND (SE)**

(74) Representative: **AWA Sweden AB
Box 5117
200 71 Malmö (SE)**

(56) References cited:
**WO-A1-2021/095879      WO-A1-2021/207431
US-A1- 2023 305 115**

**Description**

<u>Technical Field</u>

The present invention relates to encoding and decoding of lidar data frames, and in particular to entropy coding of lidar data wherein the context models used depend on the order in which the lidar sensor receives the lidar return signals.

<u>Background</u>

Lidar technology has successfully been used in the automotive industry for years and has recently also been considered in the surveillance industry as a complement to surveillance cameras and radars. A lidar can create high-resolution three-dimensional images which can be used to detect range, reflectivity, direction, and velocity of objects in its field of view. Compared to a camera, a lidar is less dependent on the lighting condition in the scene which makes it attractive for surveillance in low light conditions.

A lidar operates to repeatedly scan the monitored scene with a laser by emitting laser rays at different elevation and azimuth angles and record various parameters of any return signal that comes back to the lidar. A laser ray emitted at a certain elevation of azimuth angle may result in none, one, or several return signals. Each return signal, in turn, results in measurements of one or more physical parameters, such as range, reflectance, and velocity (doppler shift) of the object in the scene that reflected the laser ray to produce the return signal. The lidar hence produces a vast amount of data when repeatedly scanning the scene. For example, it may produce an amount of data in the order of 100 MB/s.

Due to the size of the lidar data, it is preferably compressed before transmission and storage. One way to achieve compression is to entropy encode the measurements of the one or more physical parameters resulting from a return signal. However, there is still room for improvements, especially regarding how to efficiently handle the fact that an emitted laser ray may result in a different number of return signals. Prior art document WO 2021/207431 describes a system receives encoded data regarding points in a point cloud, the data includes a prediction tree having a nodes generated based on spatial information.

<u>Summary</u>

In view of the above, it is thus an object of the present invention to mitigate the above problems and provide ways of efficiently encoding lidar data, especially when the emitted rays may result in more than one return signal.

According to a first aspect of the present invention, there is provided a method for encoding a current lidar data frame of a plurality of lidar data frames, wherein the current lidar data frame comprises zero or more lidar return signals for each of a plurality of rays emitted at a respective elevation and azimuth angle by a lidar, wherein each lidar return signal resulting from an emitted ray is associated with an index having a value $i$, $1 \leq i \leq Y$, corresponding to a sequential order based on a time of arrival of lidar return signals of the emitted ray, wherein Y>1, wherein $Y$ representing the total number of possible lidar return signals for the emitted ray.

The method comprises the steps of: receiving the current lidar data frame; for each emitted ray, and for each possible value $i$ of the index: checking whether a first lidar return signal associated with an index with the value = $i$ was received for the emitted ray, and entropy encoding an outcome of the check as a first entropy coded bit; wherein encoding the first entropy coded bit comprises using a distinct context model for each possible value $i$ of the index.

As mentioned above, lidar data is typically collected by repeatedly scanning a scene with a laser by emitting laser rays at different elevation and azimuth angles and record various parameters of any return signal that comes back to the lidar. As used herein, a frame of lidar data refers to lidar data collected during one such scan of the scene. Accordingly, as the lidar repeats the scanning of the scene, a sequence of frames of lidar data is generated. Sometimes, a scan of a lidar is also referred to as a sweep.

For each laser ray emitted by the lidar, a total number (Y) of possible lidar return signals may be received. Y is determined by the capacity of the lidar sensor/system to detect multiple objects along the path of a single ray, which may vary depending on the technology and design of the system. In some cases, Y = 3, in other cases, Y = 6. However, Y may be any number larger than 1, depending on the configuration of the lidar sensor.

When the emitted rays hit objects, they bounce back to the lidar sensor. These bounced-back light rays are the lidar return signals as discussed above. There may be zero (if nothing is detected) or more lidar return signals for each ray, depending on the environment and the objects within it. Each lidar return signal is associated with an index "i". This index represents the order in which the lidar return signals are received by the lidar sensor, based on their time of arrival. The first lidar signal to return would have an index of 1, the next one 2, and so on.

The present embodiment includes checking, for each possible value of $i$ (i.e., 1... Y) whether a return signal is returned or not and entropy encoding the outcome of this check. Beneficially, data compression may be increased since the amount of data that is included in the encoded current lidar frame can be significantly reduced. By encoding the results of these checks as described herein, information about the presence or absence of a lidar return signal is efficiently compressed within the encoded LiDAR frame. Specifically, when a lidar return signal is absent, there may be no need to encode additional data pertaining to that signal, further streamlining the data encoding process.

For each laser ray emitted by the lidar, a number of lidar return signals may be recorded in the lidar data. The number may be none, one, or several lidar return signals. For example, if the lidar is pointed to a clear sky in which there are no reflecting objects there may be no return signal, while there may be several return signals when there are several reflecting objects in the way of the laser ray.

The inventors have realized that in lidar systems, there may be a descending likelihood of receiving return signals as the index number increases. The initial return signal, indexed as 1, is typically the most reliable to be received because it is the first to bounce back from the nearest object, with the strongest signal and least distance to travel, resulting in minimal signal degradation. Higher index signals require an environment where multiple reflections are possible, such as a setting with various surfaces at different distances that can reflect additional rays back to the sensor. Moreover, these higher index signals, reflecting from farther objects, are inherently less likely to be received due to factors like signal loss, obstructions by closer objects, and environmental attenuation, making their successful detection more dependent on a complex and reflective environment. As such, by using different context models for entropy coding of the result of such check, data compression may be further increased. For example, if a lidar return signal being received is encoded as a "1", and not received is encoded as a "0", the context model for $i = 1$ probably assigns a shorter code to the "1" symbol (received signal) because it occurs more frequently. Conversely, the context model for $i = 3$, where "0" symbol may be more frequent, may assign a shorter code to "0".

In some embodiments, the first lidar return signal is resulting from a first ray the method further comprising the steps of: upon the first lidar return signal was received, encoding a first lidar measurement value associated with the first lidar return signal by: determining a predicted first lidar measurement value using one of: a first lidar measurement value encoded for a second lidar return signal associated with an index with the value = i in a previous lidar data frame among the plurality of lidar data frames or a first lidar measurement value of a third lidar return signal associated with an index with the value = i, previously encoded for the current lidar data frame, wherein the third lidar return signal was received for an emitted ray different from the first ray.

The method may further comprise checking whether a quantized difference (also referred to as a residual herein) between the first lidar measurement value associated with the first lidar return signal and the predicted first lidar measurement value is equal to zero, and entropy encoding an outcome of the check as a second entropy coded bit; and upon the quantized difference deviating from zero, encoding the quantized difference as a first entropy coded value. It should be noted that an entropy coded value differs from an entropy coded bit, in that the entropy coded bit refers to entropy encoding a single bit (1, 0). In contrast, an entropy coded value applies to a broader range of data types, encompassing the entropy encoding of any value, such as a floating-point or integer number that represents a quantized difference, which is represented by several bits.

In this embodiment, if the first lidar return signal is received, a first lidar measurement value associated with the first lidar return signal is encoded using predictive coding. Comparing to the concepts applied in video coding, the predictive encoding may comprise either using a corresponding lidar measurement value from a previous frame (c.f., P-frame encoding, or temporal prediction) or a corresponding lidar measurement value from the current frame (c.f., I-frame encoding, or spatial prediction).

For the "P-frame encoding", the "corresponding" first lidar measurement value used as the predicted first lidar measurement value is associated with a (second) lidar return signal having the same index i as the lidar return signal being encoded. In a lidar system that is scanning an area, the lidar sensor emits laser rays in a specific sequence or pattern, which typically remains consistent from one frame to the next. This means that if two consecutive lidar frames are considered, the first and the second, a particular laser ray in the first frame has an equivalent ray in the second frame. This equivalent ray occupies the same position in the scanning order. For instance, if the fifth ray in the first frame is directed at a certain elevation and azimuth angle, the fifth ray in the second frame will be directed at a same or similar elevation and azimuth angle. In some embodiments, the second lidar return signal is resulting from a previously emitted ray having a corresponding elevation and azimuth angle as the first ray, i.e., the same or very similar angles. In some embodiments, the second lidar return signal is resulting from a previously emitted ray having the same number in the scanning order as the first ray.

In some embodiments, the motion of the lidar sensor or motion in the captured environment may be considered when determining the corresponding first lidar measurement value. If the lidar sensor itself is in motion, for example attached to a vehicle or an aircraft, or if there are moving objects within the environment, the direct one-to-one correspondence of ray order between frames can be disrupted. In such cases, what was the fifth ray in the first frame might correspond to a different position (different from the fifth ray) in the scan pattern of the second frame due to these movements. To account for this, in such embodiments, the lidar system may incorporate algorithms that can adjust for the relative motion. This may involve using input from inertial measurement units (IMUs) or GPS to track the movement of the sensor or applying motion estimation techniques to understand the dynamics within the scene. Using the above techniques, the lidar system can effectively "remap" the rays from one frame to better predict lidar measurement values despite any changes in sensor position or scene geometry.

For the "I-frame encoding", a first lidar measurement value of a third lidar return signal associated with an index with the value = $i$, previously encoded for the current lidar data frame, is used as a predicted first lidar measurement value. The third lidar return signal may result from an emitted ray neighbouring the first ray, for example the emitted ray having the previous number in the scanning order (or within a threshold number) compared to the first ray.

When a predicted first lidar measurement value has been determined, the method comprises checking whether a quantized difference between the first lidar measurement value associated with the first lidar return signal and the predicted first lidar measurement value is equal to zero. Accordingly, by considering the quantization factor (e.g., going from millimetres to decimetres in a depth value indicated by the first lidar measurement value), it may be determined if the prediction is good enough such that no (relevant) difference exists.

Furthermore, the method comprises entropy encoding an outcome of the check as a second entropy coded bit. Moreover, upon the quantized difference deviating from zero, the quantized difference can be encoded as a first entropy coded value. Advantageously, data compression may be increased. Beneficially, using this strategy of entropy encoding the check as an entropy encoded bit, and only if a quantized difference deviates from zero, encode such a difference as an entropy coded value, data compression may be increased since the amount of data that is included in the encoded current lidar frame may be significantly reduced.

In examples, encoding the second entropy coded bit comprises using a distinct context model for each possible value $i$ of the index, wherein the context models used for encoding the second entropy bit are distinct from the context models used for encoding the first entropy bit. As indicated above, "later" lidar return signals, i.e., with a comparably higher index, may have a comparably larger risk of being noisier and less accurate due to several compounded factors. As the laser travels further and interacts with more surfaces, the returning signal weakens, making it more susceptible to noise. This weakening is resulting from for example beam divergence, reduced reflectivity of distant objects, and atmospheric disturbances such as dust or moisture, which can scatter and absorb the laser light. In other embodiments, the first lidar return signal may have a comparably larger risk of being noisier and less accurate during rainfall or snow. Consequently, the probability distribution of correctly predicting the first lidar measurement value may differ depending on the value of $i$. Advantageously, by using different context models for entropy coding of whether the lidar measurement value is correctly predicted or not, data compression may be further increased.

Encoding of a second (and third, etc.) lidar measurement values may be implemented similarly to the encoding of the first lidar measurement value as discussed above, for the corresponding reasons and resulting in similar advantages.

Consequently, in some examples, the method further comprises upon the first lidar return signal was received, encoding a second lidar measurement value associated with the first lidar return signal by: determining a predicted second lidar measurement value using one of: a second lidar measurement value encoded for a fourth lidar return signal associated with an index with the value = $i$ in a previous lidar data frame among the plurality of lidar data frames; or a second lidar measurement value of a fifth lidar return signal associated with an index with the value = $i$ previously encoded for the current lidar data frame, wherein the fifth lidar return signal was received for an emitted ray different from first ray. In some embodiments, the lidar return signal used to predict the second lidar measurement value is the same as the lidar return signal used to predict the first lidar measurement value. Advantageously, the complexity of the method may be reduced since the same lidar return signal is used for both predictions.

The method further comprises checking whether a second quantized difference between the second lidar measurement value associated with the first lidar return signal and the predicted second lidar measurement value is equal to zero, and entropy encoding an outcome of the check as a second entropy coded bit; and upon the second quantized difference deviating from zero, encoding the second quantized difference as a second entropy coded value; wherein encoding the third entropy coded bit comprises using a distinct context model for each possible value i of the index, wherein the context models used for encoding the third entropy bit are distinct from the context models used for encoding the first and second entropy bit.

Due to various physical properties of the environment in which the lidar sensor operates, a probability distribution of correctly predicting the second lidar measurement value associated with a lidar return signal with a certain index may differ from the probability distribution of correctly predicting the first lidar measurement value associated with a lidar return signal with the same index. As such, the encoding the third entropy coded bit comprises using a distinct context model for each possible value $i$ of the index as well as using distinct context models for encoding the third entropy bit compared to the context models used for encoding the second (and first) entropy bit.

In some examples, predicting a first lidar measurement value of the lidar return signal comprises accessing prediction data, wherein the prediction data comprises, for each emitted ray, and for each possible value $i$ of the index, one of: a first lidar measurement value of a corresponding lidar return signal comprised in a first previous lidar data frame among the plurality of lidar data frames, the corresponding lidar return signal being associated with an index with the value = $i$; or an indication of a missing value.

The prediction data thus comprises, for each emitted ray, first (and optionally second, third, etc.) lidar measurement values for each of the lidar return signal indexes $i$ (1, 2..., Y) from a previous lidar data frame or an indication of a missing value. These values may thus be used for the P-frame prediction strategy discussed above. The prediction data may be deleted at regular intervals, which will result in that all lidar measurement values in a lidar frame will be encoded using the I-frame prediction strategy discussed above. For each encoded lidar measurement values, the prediction data may be updated by inserting the lidar measurement value as a data point in the prediction data, replacing any previously included corresponding data point.

Consequently, upon the prediction data comprises an indication of a missing value for the emitted ray and the index with the value = $i$, determining a predicted first lidar measurement value may comprise determining the predicted first lidar measurement value using a first lidar measurement value of a return signal associated with an index with the value = $i$, previously encoded for the current lidar data frame, and otherwise, determining a predicted first lidar measurement value may comprise using the first lidar measurement value comprised in the prediction data for the emitted ray and the index with the value = $i$.

In some embodiments, the corresponding lidar return signal is resulting from a previously emitted ray having a corresponding elevation and azimuth angle as the emitted ray. The previously emitted ray and the emitted ray may have the same number in the scanning order of the lidar sensor. As discussed above, motion of the lidar sensor or motion in the captured environment may also be considered when determining the corresponding lidar return signal.

In some examples, for at least one emitted ray, and for at least one value of $i$, one or more intermediate lidar frames exist among the plurality of lidar data frames between the first previous lidar data frame and the current lidar data frame. For example, consider a scenario where a first lidar measurement value is encoded for a lidar return signal with an index of 2. Specifically, it corresponds to the lidar return signal resulting from the seventh emitted ray in the current lidar frame. Suppose that for the immediately preceding lidar frame, the lidar return signal with index = 2 was not received for the seventh emitted ray. In this case, the prediction may still be made using the first lidar measurement value for a lidar return signal with index = 2. However, this value would be taken from the lidar return signal resulting from the seventh emitted ray, but for the second preceding lidar frame. Advantageously, the present embodiment may be less sensitive to noise and missed lidar return signals.

In examples, the plurality of rays are emitted in a same order along scanning lines within each lidar data frame of the plurality of lidar data frames, wherein the method further comprises: for each scanning line: fitting the elevation angle and the azimuth angle of each ray of a first set of rays emitted along the scanning line to an estimated scanning line y = kx+m, wherein y represents the elevation angle and x represents the azimuth angle, determining a plurality of estimated sample points along the estimated scanning line, each sample point estimating the elevation angle and the azimuth angle of an individual ray among the first set of rays.

The encoding a position of each ray of the plurality of rays may then comprise using the estimated scanning lines and the plurality of sample points of each scanning line. Advantageously, predictability and regularity of the scanning process may be leveraged, such that the amount of data that needs to be explicitly encoded can be reduced. Instead of encoding the elevation and azimuth angles for each individual ray, which can be highly redundant if the rays follow a predictable pattern, only parameters of the estimated scanning line (k and m in the linear equation) as well as the sample rate per estimated scanning line need to be encoded.

In some embodiments, encoding a position of each ray of the plurality of rays using the estimated scanning lines and the plurality of sample points of each scanning line are performed once for the plurality of lidar data frames. Since the predictability and regularity of the scanning process may apply to each of the plurality of lidar data frames, the estimation process may only be needed once, for example at startup of the lidar sensor.

In examples, wherein the plurality of sample points of each of the estimated sample lines in combination forms an irregular grid; wherein encoding a first lidar measurement value associated with the first lidar return signal further comprises determining a first lidar measurement value to encode for the first lidar return signal by mapping the first ray and a neighbouring ray to the irregular grid and interpolating a respective first lidar measurement of a lidar return signal of the first ray and of the neighbouring ray based on the mapping. The use of an irregular grid formed by the combination of sample points from estimated scanning lines may provide a flexible framework for encoding lidar data. A measurement value (like distance or reflectance) may be determined by interpolating between the measurement value of the first lidar return signal and a corresponding measurement value from a neighbouring ray based on where the first ray and the neighbouring ray fall on the grid. This may allow for a more accurate representation of the scanned environment, even in the case where the strategy of estimating ray positions is used to substantially reduce the amount of encoded data as discussed above. In other embodiments, more complex interpolation is used, for example considering more than two data points.

According to a second aspect of the invention, the above object is achieved by a system comprising: one or more processors; and one or more non-transitory computer-readable media storing computer executable instructions that, when executed by the one or more processors, cause the system to perform actions comprising: encode a current lidar data frame of a plurality of lidar data frames, wherein the current lidar data frame comprises zero or more lidar return signals for each of a plurality of rays emitted at a respective elevation and azimuth angle by a lidar, wherein each lidar return signal results from an emitted ray is associated with an index having a value $i$, $1 \leq i \leq Y$, corresponding to a sequential order based on a time of arrival of lidar return signals of the emitted ray, wherein $Y$ represents the total number of possible lidar return signals for the emitted ray, wherein $Y > 1$.

The encoding comprises: receive the current lidar data frame; for each emitted ray, and for each possible value $i$ of the index: check whether a first lidar return signal associated with an index with the value $= i$ was received for the emitted ray, and entropy encode an outcome of the check as a first entropy coded bit; wherein encoding the first entropy coded bit comprises using a distinct context model for each possible value $i$ of the index.

According to a third aspect of the invention, the above object is achieved by a non-transitory computer-readable storage medium having stored thereon instructions for implementing the method according to the first aspect when executed on a device having processing capabilities.

The second and third aspects may generally have the same features and advantages as the first aspect.

According to a fourth aspect of the invention, the above object is achieved by a method for decoding a current encoded lidar data frame of a plurality of encoded lidar data frames, wherein the encoded current lidar data frame encodes Y lidar return signals resulting from each of a plurality of rays emitted at a respective elevation and azimuth angle by a lidar, wherein $Y > 1$, wherein each encoded lidar return signal comprises a first entropy encoded bit, and being associated with an index having a value $i$, $1 \leq i \leq Y$ corresponding to a sequential order based on a time of arrival of lidar return signals of the emitted ray, wherein the method comprises the steps of: receiving the encoded current lidar data frame; for each emitted ray, and for each encoded lidar return signal: identifying a context model to use for decoding the first entropy encoded bit, using the index $i$ associated with the encoded lidar return signal, wherein a distinct context model is identified for each possible value $i$ of the index; determining whether a first lidar return signal with the sequential order of $i$ was received for the emitted ray by decoding the first entropy encoded bit using the identified context model.

In some embodiments, wherein, upon the first lidar return signal was received, the encoded lidar return signal comprises a second entropy encoded bit; wherein the first lidar return is resulting from a first ray.

The method may further comprise determining a first lidar measurement value of the first lidar return signal by: identifying a context model to use for decoding the second entropy encoded bit, using the index $i$ associated with the encoded lidar return signal, wherein a distinct context model is identified for each possible value $i$ of the index, wherein the context models used for decoding the second entropy bit are distinct from the context models used for decoding the first entropy bit; decoding the second entropy encoded bit into a second bit using the identified context model.

The method may further comprise determining a predicted first lidar measurement value using one of: a decoded first lidar measurement value of a second decoded lidar return signal associated with an index with the value $= i$ in a previously decoded lidar data frame, or a decoded first lidar measurement value of a third lidar return signal associated with an index with the value $= i$, previously decoded for the current encoded lidar data frame, wherein the third lidar return signal is resulting from an emitted ray different from the first ray.

The method may further comprise, upon the second bit having a first value; setting the first lidar measurement to the predicted first lidar measurement; and upon the second bit having a second value; decoding a residual from an entropy encoded value associated with the first encoded lidar return signal and setting the first lidar measurement to a combination of the predicted first lidar measurement and the decoded residual.

The fourth aspect may generally have the same advantages as the first aspect. As discussed above, the lidar data frames have been encoded such that less bandwidth is needed for transmission, and/or to require less storage space. The decoding method according to the fourth aspect facilitates these resource savings by enabling the use of compressed data according to the first aspect across various applications.

Moreover, the decoding method of the fourth aspect may generally have decoder capabilities corresponding to the encoder features described in the first aspect.

Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:

Figure 1 illustrates a lidar which is used to monitor a scene;
Figure 2 schematically illustrates a lidar scan of a scene and a sequence of frames of lidar data originating from subsequent lidar scans of the scene according to embodiments;
Figure 3 illustrates entropy coding of different properties of a lidar data frame;
Figure 4 schematically illustrates an encoder for encoding lidar data according to embodiments;
Figure 5 is a flowchart of a method for encoding lidar data according to embodiments;
Figure 6 illustrates an estimation process of the elevation and azimuth of rays emitted in a lidar scan, according to embodiments;
Figure 7 illustrates an interpolation method to determine a lidar measurement value to encode;
Figure 8 schematically illustrates a decoder for decoding encoded lidar data according to embodiments;
Figure 9 is a flowchart of a method for decoding encoded lidar data according to embodiments.

Detailed Description

The present invention will now be described more fully hereinafter with reference to the accompanying drawings, in which embodiments of the invention are shown. The systems and devices disclosed herein will be described during operation.

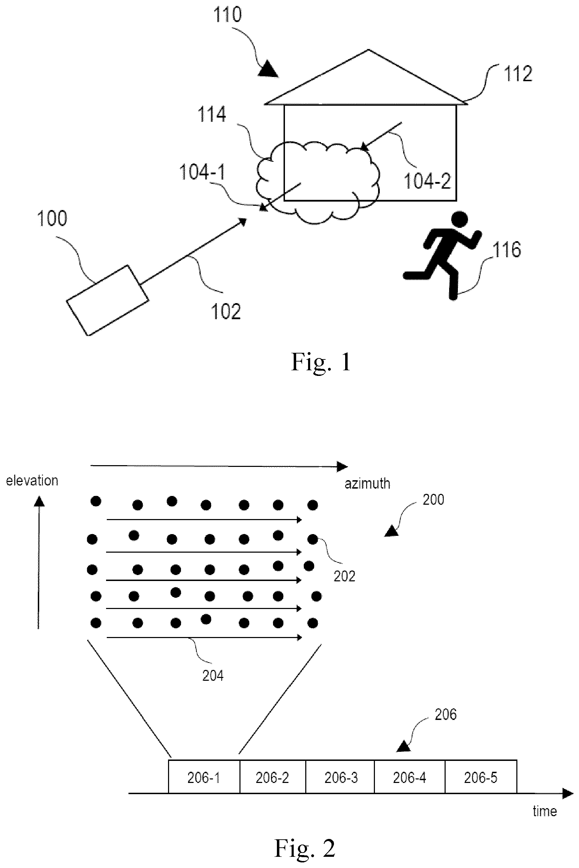

Figure 1 illustrates a lidar 100 which is used to monitor a scene 110. The scene 110 includes objects, such as a house 112, a bush 114 in front of the house 112, and a person 116. The lidar 100 scans the scene 110 by emitting laser rays 102 towards the scene 110. An emitted laser ray 102 is reflected off objects in the scene 110 and returns to the lidar 100 in the form of lidar return signals 104 (also referred to herein as "return signals"). As the laser ray 102 travels away from the lidar 100 its cross-section increases. As a consequence, one emitted laser ray 102 may result in more than one return signal 104. In the illustrated example, the laser ray 102 results in two return signals, one return signal 104-1 from a reflection of the bush 114 and another return signal 104-2 from a reflection of the house 112 from a portion of a ray 102 having passed through the bush 114. It is understood that an emitted laser ray 102 in principle may result in any number of return signals, such as no return signal, one return signal, or several return signals. However, there is typically a maximum number of return signals per emitted ray that the lidar 100 is able to detect (referred herein as "Y"). To exemplify, there are commercially available lidars that are able to detect up to three or up to six return signals per emitted ray. The return signals 104 are detected as they come back to the lidar 100. Each return signal 104 is indicative of various parameters or properties, such as range, reflectivity, and velocity (doppler shift), of the object that reflected the laser ray 102. Therefore, from each return signal 104, the lidar 100 may produce measurements of these parameters, herein referred to as lidar measurement values, and associate these with the return signal 104. How the lidar 100 produces such measurement values is per se known in the art.

The return signals 104 for a certain ray 102 will be received by the lidar 100 in a sequential order, based on the distance to the object (e.g., the bush 114 and the house 112) in the scene 110 from which the return signals are reflected. As such, the return signal 104-1 will be received by the lidar 100 prior to the return signal 104-2 is received by the lidar 100. Consequently, each return signal 104 from an emitted ray 102 is associated with an index having a value $i$, where $i$ is between 1 and Y (the maximum number of return signals per emitted ray that the lidar 100 can detect). The index i is thus corresponding to a sequential order based on a time of arrival of lidar return signals 104 of the emitted ray 102.

Table 1 below is an example of what type of data the lidar 100 produces for each emitted ray, together with the number of bits used to represent each data item. As can be seen therein, for each ray there is provided a scan ID which is indicative of during which scan of the scene the ray was emitted. For each ray there is also provided a time when the ray was emitted, and the elevation and azimuth angle at which the ray was emitted. Further, there are provided measurement values of various parameters for each return signal associated with the ray. In this case, this includes a measurement of range, reflectance, and doppler shift (velocity), but there are many lidars which only measure range and reflectance.

*Table 1*

| Ray | | |
|---|---|---|
| Scan ID | 7 bits | |
| Time | 24 bits | |
| Elevation | 16 bits | 8 bytes |
| Azimuth | 16 bits | |
| Return (n per ray, where n is $\leq 3$ or $\leq 6$) | | |
| Range | 19 bits (2mm to 1000m) | 4 bytes |
| Reflectance | 10 bits | |
| Doppler shift | 8-16 bits | 1-2 bytes |

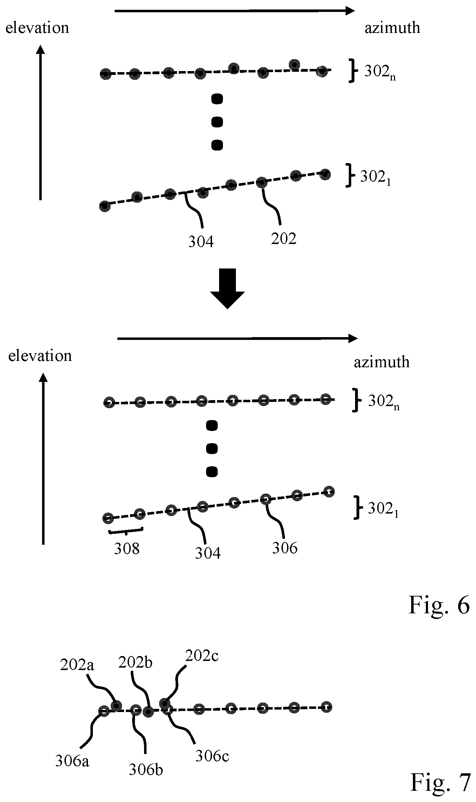

When scanning the scene 110, the lidar 100 sends out laser rays 102 at a certain rate. Each ray 102 is sent out at an elevation angle and an azimuth angle. At least one of the elevation and azimuth angle is changed between subsequent rays 102, for example by using one or more rotating mirrors in the lidar 100, such that the elevation and azimuth angles of the emitted rays 102 form a scanning pattern. This principle is further illustrated in figure 2 which illustrates a scanning pattern 200 of azimuth and elevation angles of a plurality of rays 104 emitted by the lidar 100 during a scan of the scene. Each dot in figure 2 (and correspondingly in figure 6 below) corresponds to the azimuth and elevation angle of one emitted ray 202, and the arrows 204 indicate the order in which the rays are emitted during the scan. In this example the scanning is made in a row-wise fashion, but other scanning patterns and scanning directions are of course possible. However, it is understood that many other variants and options are possible. It is further understood that the number of rays 202 in figure 2 is selected for illustrative purposes. In a more realistic case, a lidar may send out thousands of rays such as 200x250 rays, during a scan of the scene. The resolution of the lidar may change dynamically. For example, it can remain at a first resolution for a first number of subsequent frames, and then change to a second resolution in a second number of subsequent frames.

During the scan, the lidar 100 detects return signals associated with each of the emitted rays and outputs measurement values associated with the return signals, e.g., as exemplified in Table 1. The resulting data from all rays emitted during the scan is collected in a frame 206-1 of lidar data. Accordingly, the lidar data in the frame 206-1 includes measurement values from a number of lidar return signals for each ray that was emitted during the scan. Once the scan is over, the lidar 100 starts a new scan of the scene and generates lidar data which is collected in a subsequent frame 206-2 of lidar data. This is then repeated over and over again, and as a result a sequence 206 of frames 206-1, 206-2, 206-3, 206-4, 206-5 of lidar data is generated, wherein the frames correspond to subsequent scans of the scene.

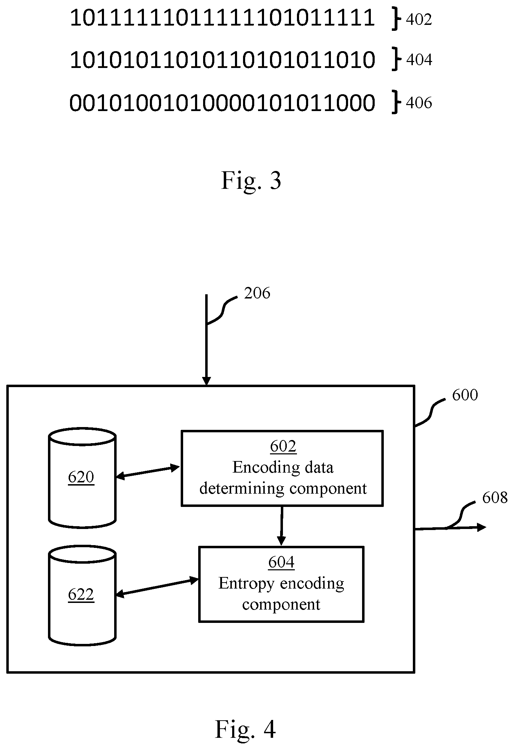

Figure 3 shows by way of example three different datasets 402-406. Each datapoint (0 or 1) in the datasets 402-406 are intended to represent whether a lidar return signal of a particular order (the index $i$ as discussed above) is received or not. For example, the first data point in the first dataset 402 corresponds to whether the lidar return with index 1 (the first return) is received by the lidar for the first ray emitted by the lidar. The first data point in the second dataset 404 corresponds to whether the lidar return with index 2 (the second return) is received by the lidar for that ray. The first data point in the third dataset 406 corresponds to whether the lidar return with index 3 (the third return) is received by the lidar for that ray. The same is true for the second data point (relating to the second ray), the third data point (relating to the third ray), etc. As can be seen in the example of figure 3, where a "1" represent a return and a "0" represents a non-return, the likelihood that a lidar return signal is received by the lidar decreases with a higher index.

Entropy coding is a method of lossless data compression that is based on the statistics of the data set. The basic idea is to assign shorter codes to more frequently occurring data elements and longer codes to less frequent elements. Entropy coding (also referred to as arithmetic coding) relies on the underlying principle that by using variable-length codes based on the frequency of occurrence (probability) of items in the data set, the average length of the codes (and thus the total size of the encoded data) can be reduced. The items in this case may be a sequence of 0:s and 1:s with different lengths. For example, one item may be "101111", another item may be "001" etc. The entropy coder learns the optimal items to encode a data set as compact as possible. These items are determined using a context model. A context model for an entropy coder predicts the probability distribution of the next symbol to be encoded, based on the context of previously encoded symbols. This context can include the actual values of recent symbols, the frequency of their occurrence, their position in the sequence, or any other relevant information that can be used to improve the prediction of the next symbol.

As can be seen in figure 3, the likelihood of a "1" in the first dataset 402 is higher than the likelihood of a "1" in the second dataset, which in turn is higher than the likelihood of a "1" in the third dataset. As such, it is advantageous to use different context models for the three datasets, such as the values of the datasets 402-406 can be encoded as compact as possible.

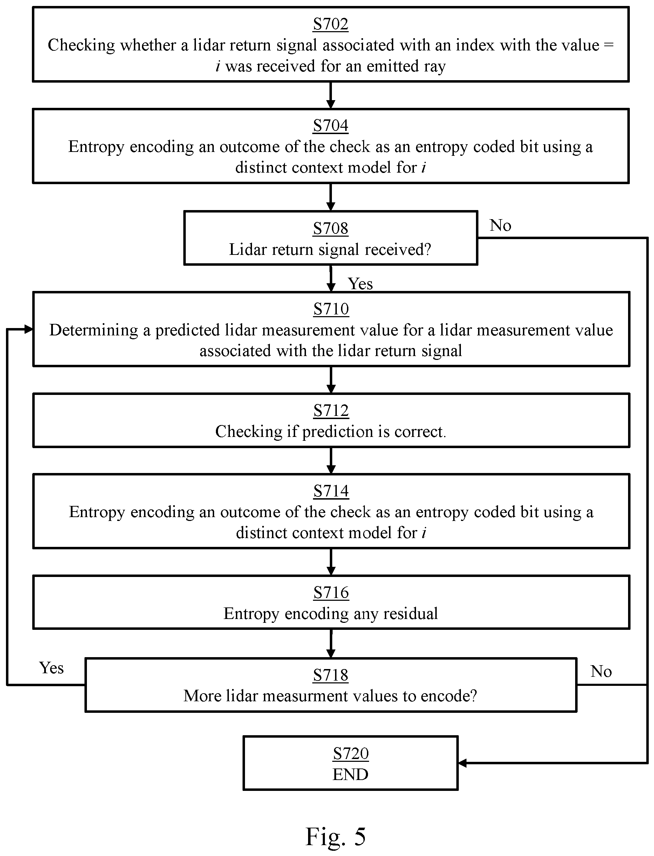

Figure 4 schematically shows an encoder 600 for encoding a current lidar data frame of a plurality of lidar data frames 206. The encoder 600 implements techniques of using different context models as discussed above in conjunction with figure 3. Functionality of the encoder 600 according to embodiments will now be described in conjunction with the flow chart shown in figure 5.

The encoder 600 is provided downstream of the lidar and receives a plurality of lidar data frames 206, typically in a sequence (stream). Encoding of one such lidar data frame (referred below as the current lidar data frame) will now be described.

The encoder 600 thus receives the current lidar data frame. The encoding process may be performed on data resulting by a single ray at the time, ray by ray, for example in an order as indicated in figure 2.

The encoder 600 comprises an encoding data determining component 602 which determines which data that should represent the data of the lidar data frame. This data is then provided to the entropy encoding component 604 which encodes the data as will be described below.

The lidar data frame to be processed comprises data (e.g., lidar measurement values) for each lidar return signal that was received by the lidar for each ray. If a lidar return signal was not received, for example lidar return signal of index 2 and 3 for ray number 21, this is indicated in the lidar data frame, either explicitly or implicitly.

In the following, encoding of a single (first) lidar return signal (with a value of index $i$) for a single (first) emitted ray is described. This process is repeated for each possible value of index $i$ for the first ray and then for each of the rays which resulted in the current lidar data frame. As used herein, "first" "second", "third" etc., in the context of rays, frames or lidar returns signals, is used as a label, and does not imply any sort of positional information unless specifically stated as such.

The encoding data determining component 602 starts by checking S702 whether a first lidar return signal associated with an index with a value of for example 1 was received for the emitted ray. The outcome of the check (e.g., a "0" or a "1" as discussed above) is then sent to the entropy encoding component 604 which entropy encodes the outcome of the check as a first entropy coded bit. Any suitable coding methods may be used such as Context-Adaptive Binary Arithmetic Coding (CABAC) or Context-Adaptive Variable-Length Coding (CAVLC). Other entropy encoders are equally applicable. For the reasons discussed above, such entropy encoding is performed using distinct context model for each possible value $i$ of the index associated with the lidar return signal. The entropy encoding component may thus have access to a database 622 of context models and select the appropriate one based on the value of $i$ and optionally also the origin of the bit to encode (e.g., is it a check whether a lidar return signal has been received or is it a check of a prediction of a lidar measurement value as will be discussed below).

In some examples, the encoding data determining component 602 continues by, for the first lidar return signal and the currently processed value of the index, upon the first lidar return signal with that index was received as checked S708 above, determining S710 a predicted first lidar measurement value.

The predicted first lidar measurement value may be determined using a first lidar measurement value encoded (and subsequently decoded to be used for prediction, similar to the prediction process used for example in video coding) for a second lidar return signal associated with an index with the value = $i$ (the same value of the index as for the first lidar return signal) in a previous lidar data frame among the plurality of lidar data frames. The second lidar return signal may be received from a previously emitted ray (emitted for the previous lidar data frame) having a corresponding elevation and azimuth angle as the first ray. The previously emitted ray may have the same number in the scanning order (discussed in conjunction with figure 2 above) as the first ray but for the previous lidar data frame. The previous lidar data frame may be the immediately subsequent one in the plurality of lidar data frames 206 received by the encoder 600. There may in some cases be one or more lidar data frames received by the encoder 600 between the current lidar data frame and the previous lidar data frame. In some cases, the encoding data determining component 602 considers sensor movement or environmental motion when predicting measurement values. Since movements can disrupt the correspondence of rays between frames, algorithms may be used to adjust for these variations. This could involve data from inertial measurement units (IMUs) or GPS to monitor lidar motion, or motion estimation methods for dynamic scenes. Consequently, the encoding data determining component 602 can realign the rays across frames to determine which previously emitted ray from a previous lidar data frame to use, regardless of any positional shifts of the lidar or environmental changes.

The predicted first lidar measurement value may alternatively be determined using first lidar measurement value of a third lidar return signal associated with an index with the value = $i$ (the same value of the index as for the first lidar return signal), previously encoded (and subsequently decoded as described above) for the current lidar data frame, wherein the third lidar return signal was received for an emitted ray different from the first ray. In this case, the previously emitted ray may be the emitted ray immediately preceding the first ray in the scanning order (discussed in conjunction with figure 2 above). In other examples, the used ray may be "further away" from the first ray in the same scanning line or be a ray from another scanning line. In some embodiments, the closest preceding ray (according to the scanning pattern of the lidar sensor) resulting in a lidar return signal with the value = $i$ is used for prediction.

The prediction of a lidar measurement value may be accomplished by accessing prediction data 620. The prediction data comprises, for each emitted ray (e.g., for each ray emitted to produce a lidar data frame), and for each possible value $i$ of the index, one of: a first lidar measurement value of a corresponding lidar return signal comprised in a first previous lidar data frame among the plurality of lidar data frames, the corresponding lidar return signal being associated with an index with the value = $i$; or an indication of a missing value.

In this context, the corresponding lidar return signal may be the result of a previously emitted ray having a corresponding elevation and azimuth angle (e.g., same index in the scanning order) as the emitted ray for which the lidar measurement value is predicted. In some embodiments, "corresponding elevation and azimuth angle" means that the elevation and azimuth of the two rays are closely aligned within a certain tolerance range. However, it is important to note that they do not need to be exactly identical. There can be slight variations between the two sets of angles, as long as they are within an acceptable degree of proximity to each other. This tolerance accounts for minor discrepancies that may arise due to factors like equipment precision or environmental conditions. However, in some cases, movements of the lidar or the environment may be considered as described above.

If the prediction data 620 comprises an indication of a missing value for the emitted ray and the index with the value = $i$, the encoding data determining component 602 may predict the first lidar measurement value using a corresponding lidar measurement value from a lidar return signal (with the same index) in the same lidar data frame as discussed above.

However, if the prediction data 620 comprises a lidar measurement value as discussed above, the encoding data determining component 602 may use the lidar measurement value comprised in the prediction data as the predicted lidar measurement value.

The encoding data determining component 602 (or some other component in the decoder 600) may also, continuously, replace or add data to the prediction data 620, as new lidar data frames among the plurality of lidar data frames 206 are received and encoded. Moreover, at regular intervals, the prediction data 620 may be erased to start over with completely fresh data. Immediately after such erasing, all predictions are made using return lidar signals from the currently encoded lidar data frame (c.f., key frames in video encoding).

When the encoding data determining component 602 has determined S710 the predicted lidar measurement value, the encoding data determining component 602 may then check S712 whether a quantized difference between the first lidar measurement value associated with the first lidar return signal and the predicted first lidar measurement value is equal to zero. Quantization may remove unnecessary granularity of lidar measurement values, and for example go from millimetres to decimetres for depth data.

The outcome of this check S712 may then be encoded by the entropy encoding component 604 as a second entropy coded bit, preferably using a distinct context model for each possible value $i$ of the index, wherein the context models used for encoding the second entropy bit are distinct from the context models used for encoding the first entropy bit (the encoding S704 of the check whether a lidar return signal with the index = i was returned or not). As discussed above, prediction may get gradually worse for an increasing value of the index which results in a different probability distribution of "correctness" for the predictions of lidar measurement values of a lidar return signal with index = 1 compared to predictions of lidar measurement values of a lidar return signal of index 2.

If the prediction is not correct, i.e., upon the quantized difference deviate from zero, the quantized difference may be encoded S716 as a first entropy coded value. Such encoding S716 may be implemented using Exponential-Golomb coding but any other suitable coding methods may be used such as CABAC or CAVLC. Other entropy encoders are equally applicable.

The encoder checks S718 if there are more lidar measurement values to encode for the currently encoded lidar return signal, and proceed accordingly by encoding this using steps S710-S716 or the encoding of the first lidar return signal is ended S720, After this, the next lidar return signal in an index order for the first ray is encoded using the same strategy, and then the lidar return signals for the next ray is encoded, etc. Finally, a full lidar data frame has been encoded into an encoded lidar data frame and may be stored or transmitted as part of a sequence of encoded lidar data frames 608.

As indicated in table 1 above, the data describing the elevation and azimuth angles of a ray may require a substantial amount of data. Figure 6 shows by way of example how the elevation and azimuth may be estimated such that the data required to transfer this information can be substantially decreased.

Lidar data is typically represented on an irregular grid, but along scanning lines $302_{1...n}$. Further, the lidar rays 202 are, for each frame, organized in a consistent sequence along these scanning lines $302_{1...n}$, which could be from left to right or top to bottom, or another systematic arrangement.

In some embodiments, for each scanning line $302_{1...n}$, the elevation angle and the azimuth angle of each ray 202 of a first set of rays emitted along the scanning line $302_{1...n}$, is fitted to an estimated scanning line 304. The estimated scanning line is represented by.

$$y = kx + m \qquad \textit{Equation 1}$$

where y represents the elevation angle and x represents the azimuth angle.

Using this estimated scanning line 304, a plurality of estimated sample points 306 along the estimated scanning line can be determined. Each sample point 306 is estimating the elevation angle and the azimuth angle of an individual ray 202 among the first set of rays. The positioning of these sample points 306 is set at regular intervals 308 along the estimated scanning line 304.

The encoding of the position of each ray within the array of rays may then utilize the predicted scanning lines and the series of equally spaced sample points along each line. In some embodiments, the encoding a position of each ray of the plurality of rays using the estimated scanning lines and the plurality of sample points of each scanning line are performed once for the plurality of lidar data frames.

The encoding of the angles of a ray 202 may thus be accomplished by encoding $k$ and $m$ from equation 1, along with the ray's sequential position along the scanning line.

If the strategy of mapping the rays to predefined positions are used, different interpolation techniques may be used to determine the lidar measurements values that correspond to a certain sample point.

In one embodiment, a nearest neighbour interpolation strategy (snapping technique) is used. Taking the examples shown in figure 7, for sample point 306a, the values resulting from the ray 202a would be used. Similarly, for sample point 306b, the values resulting from the ray 202b would be used, and for sample point 306c, the values resulting from the ray 202c would be used. However, in other embodiments, more complex interpolation techniques are used.

Linear interpolation may be used. In this example, encoding a first lidar measurement value associated with the first lidar return signal further comprises determining a first lidar measurement value to encode for the first lidar return signal by mapping the first ray 202b and a neighbouring ray (e.g., one of the rays 202a, 202c) to the irregular grid and interpolating a respective first lidar measurement of a lidar return signal of the first ray and of the neighbouring ray based on the mapping. Put differently, encoding a first lidar measurement value associated with the first lidar return signal may further comprise determining (e.g., by the encoding data determining component 602 in figure 4) a first lidar measurement value to encode for the first lidar return signal. This may be achieved using the interpolation as described in figure 7, i.e., by identifying a first sample point 306b estimating the first ray 202b, and identifying at least one neighbouring ray 202a, 202c, each neighbouring ray 202a, 202c being estimated by a neighbouring sample point 306a, 306c to the first sample point 306b.

The first lidar measurement value may be determined by interpolating a first lidar measurement value of the first lidar return signal with a first lidar measurement value of each lidar returns signal resulting from the least one neighbouring rays 202a, 202c (all lidar return signals having the same index $i$). The interpolation may be performed based on a distance measurement between the elevation angle and the azimuth angle of the first sample point 306b, and the elevation angle and azimuth angle of each ray of the first ray 202a and the at least one neighbouring rays 202a, 202c. The interpolation may be linear interpolation, spline interpolation or any other suitable interpolation. Depending on the configuration of the encoding device 600, a varying number of adjacent rays might be utilized for interpolation. Sometimes, rays from alternate scanning lines may also be employed in the process.

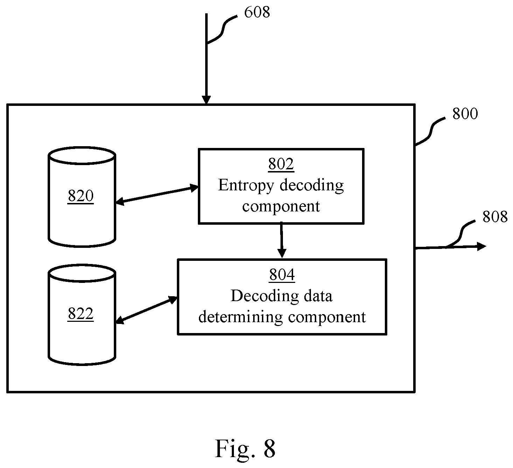

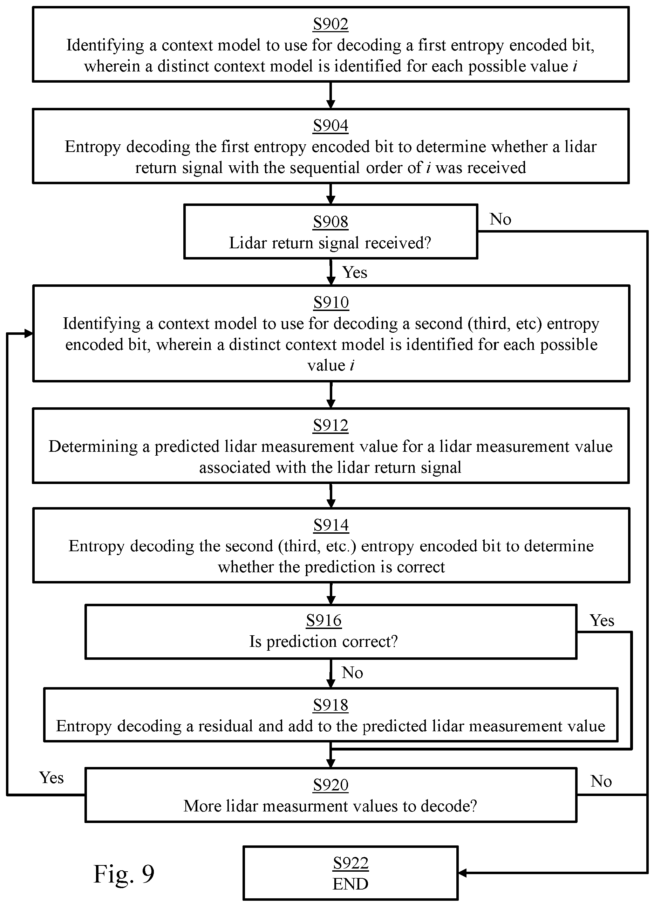

Figure 8 shows a decoder 800 for decoding lidar data frames encoded as described herein. Functionality of the decoder according to embodiments will now be described in conjunction with the flow chart shown in figure 9.

The decoder 800 is configured to decode encoded lidar data frames 608 received at the decoder 800.

The decoder 800 comprises an entropy decoding component 802 which decode received data for a current encoded lidar data frame. This data is then provided to the decoding data determining component 604 which interprets the data received from the entropy decoding component 802 and determines the data of the decoded lidar data frame (i.e., lidar measurement values of lidar return signals).

Each encoded lidar data frame (i.e., one of the plurality of encoded lidar data frames 608) encodes Y>1 lidar return signals resulting from each of a plurality of rays emitted at a respective elevation and azimuth angle by a lidar. Each encoded lidar return signal comprises a first entropy encoded bit. Each encoded lidar return signal is associated with an index having a value $i$, $1 \leq i \leq Y$ corresponding to a sequential order based on a time of arrival of lidar return signals of the emitted ray.

In the following, decoding of a single (first) lidar return signal (with a value of index $i$) for a single (first) emitted ray is described. This process is repeated for each possible value of index $i$ for the first ray and then for each of the rays which resulted in the current encoded lidar data frame.

The entropy decoding component 802 identifies S902 a context model to use for decoding the first entropy encoded bit. Using the index $i$ associated with the encoded lidar return signal, the entropy decoding component 802 identifies a distinct context model for each possible value $i$ of the index, for example stored in a database 820.

The entropy decoding component 802 then decodes the first entropy encoded bit, using the identified context model. The decoded bit is transmitted to the decoding data determining component 804 which determines whether a lidar return signal with the sequential order of $i$ was received based on the value of the decoded bit. The decoded bit thus indicates the reception status of the lidar return signal. Specifically, if the decoded bit holds a first value, such as 0, this signifies that the lidar return signal was not received. Conversely, a second value, like 1, indicates that the lidar return signal was successfully received.

In some embodiments, upon the first lidar return signal was not received, the decoding of the lidar return signal with the sequential order of $i$ is ended S922, and the decoder 800 continues with the lidar return signal having the next index value.

In some embodiments, upon the first lidar return signal was received, the encoded lidar return signal comprises a second entropy encoded bit. In these embodiments, the decoder 800 determines a first lidar measurement value of the first lidar return signal. This may be done by the entropy decoding component 802 identifying S910 a context model (from the database 820) to use for decoding the second entropy encoded bit, using the index $i$ associated with the encoded lidar return signal. Similar to above, a distinct context model is identified for each possible value $i$ of the index, wherein the context models used for decoding the second entropy bit are distinct from the context models used for decoding the first entropy bit.

The entropy decoding component 802 decodes S914 the second entropy encoded bit into a second bit using the identified context model and sends the decoded bit to the decoding data determining component 822.

The decoding data determining component 822 determines S912 a predicted first lidar measurement value. The predicted first lidar measurement value is determined S912 using one of:

a) a decoded first lidar measurement value of a second decoded lidar return signal associated with an index with the value = $i$ in a previously decoded lidar data frame, or

b) a decoded first lidar measurement value of a third lidar return signal associated with an index with the value = $i$,

previously decoded for the current encoded lidar data frame, wherein the third lidar return signal is resulting from an emitted ray different from the first ray;

The decoding data determining component 804 determines S912 the predicted first lidar measurement value for example by accessing prediction data 822. Similarly as discussed above regarding the prediction data 622 used by the encoder 600, the prediction data 822 may comprise for each emitted ray, and for each possible value $i$ of the index, one of: a first lidar measurement value of a corresponding lidar return signal comprised in a first previous decoded lidar data frame among the plurality of lidar data frames decoded from the plurality of encoded lidar data frames 608, wherein the corresponding lidar return signal being associated with an index with the value = $i$; or an indication of a missing value.

Upon the prediction data 822 comprises an indication of a missing value for the emitted ray and the index with the value = $i$, the decoding data determining component 804 uses option b) above, and otherwise it uses the data from the prediction data 822, i.e., option a) above.

The decoding data determining component 804 then uses the second bit received from the entropy decoding component 802 to determine S916 if the predicted first lidar measurement is correct or not. Upon the second bit having a first value, the decoding data determining component 804 sets the first lidar measurement to the predicted first lidar measurement.

Upon the second bit having a second value, the entropy decoding component 802 decodes S918 a residual from an entropy encoded value associated with the first encoded lidar return signal, and the decoding data determining component 804 sets S918 the first lidar measurement to a combination of the predicted first lidar measurement and the decoded residual.

The encoder 800 checks S920 if there is more lidar measurement values to decode for the currently decoded lidar return signal, and proceed accordingly by decoding this using steps S910-S918 or the decoding of the first lidar return signal is ended S922, and the decoder 800 continues with the lidar return signal having the next index value, and then on to the next ray, until the current encoded lidar data frame has been completely decoded.

The decoded lidar data frames 808 may be stored or transmitted, e.g., to visualize the lidar data or analyse it.

The encoder 600 (and similarly the decoder 800) may in examples be implemented in a single device. In other examples, some or all of different components (modules, units, etc.,) 602, 604 (802, 804) may be implemented in a server or in the cloud or in separate devices. Generally, the devices (camera, server, etc.,) implementing the components 602, 604 802, 804 may comprise circuitry which is configured to implement the components 602, 604 802, 804 and, more specifically, their functionality. The described functionality of the encoder 600 and decoder 800 can be implemented advantageously in one or more computer programs that are executable on a programmable system including at least one programmable processor coupled to receive data and instructions from, and to transmit data and instructions to, a data storage system, at least one input device such as a lidar, and at least one output device such as a display. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method for encoding a current lidar data frame of a plurality of lidar data frames (206), wherein the current lidar data frame comprises zero or more lidar return signals (104) for each of a plurality of rays (102, 202) emitted at a respective elevation and azimuth angle by a lidar (100), wherein each lidar return signal resulting from an emitted ray is associated with an index having a value $i$, $1 \leq i \leq Y$, corresponding to a sequential order based on a time of arrival of lidar return signals of the emitted ray, wherein $Y>1$, wherein $Y$ representing the total number of possible lidar return signals for the emitted ray, wherein the method comprising the steps of:

   receiving the current lidar data frame;
   for each emitted ray, and for each possible value $i$ of the index:
   checking (S702) whether a first lidar return signal associated with an index with the value = $i$ was received for the emitted ray, and entropy encoding (S704) an outcome of the check as a first entropy coded bit;
   wherein encoding the first entropy coded bit comprises using a distinct context model for each possible value $i$ of the index.

2. The method of claim 1, wherein the first lidar return signal is resulting from a first ray the method further comprising the steps of:

upon the first lidar return signal was received, encoding a first lidar measurement value associated with the first lidar return signal by:

determining (S710) a predicted first lidar measurement value using one of:

a first lidar measurement value encoded for a second lidar return signal associated with an index with the value = $i$ in a previous lidar data frame among the plurality of lidar data frames or
a first lidar measurement value of a third lidar return signal associated with an index with the value = $i$, previously encoded for the current lidar data frame, wherein the third lidar return signal was received for an emitted ray different from the first ray;

checking (S712) whether a quantized difference between the first lidar measurement value associated with the first lidar return signal and the predicted first lidar measurement value is equal to zero, and entropy encoding (S714) an outcome of the check as a second entropy coded bit; and
upon the quantized difference deviating from zero, encoding (S716) the quantized difference as a first entropy coded value.

3. The method of claim 2, wherein the second lidar return signal is resulting from a previously emitted ray having a corresponding elevation and azimuth angle as the first ray.

4. The method of any one of claims 2-3, wherein encoding the second entropy coded bit comprises using a distinct context model for each possible value i of the index, wherein the context models used for encoding the second entropy bit are distinct from the context models used for encoding the first entropy bit.

5. The method of any one of claims 2-4, further comprising, upon the first lidar return signal was received, encoding a second lidar measurement value associated with the first lidar return signal by:

determining (S710) a predicted second lidar measurement value using one of:

a second lidar measurement value encoded for a fourth lidar return signal associated with an index with the value = $i$ in a previous lidar data frame among the plurality of lidar data frames; or
a second lidar measurement value of a fifth lidar return signal associated with an index with the value = $i$ previously encoded for the current lidar data frame, wherein the fifth lidar return signal was received for an emitted ray different from first ray;

checking (S712) whether a second quantized difference between the second lidar measurement value associated with the first lidar return signal and the predicted second lidar measurement value is equal to zero, and entropy encoding (S714) an outcome of the check as a third entropy coded bit; and
upon the second quantized difference deviating from zero, encoding (S716) the second quantized difference as a second entropy coded value;
wherein encoding the third entropy coded bit comprises using a distinct context model for each possible value $i$ of the index, wherein the context models used for encoding the third entropy bit are distinct from the context models used for encoding the first and second entropy bit.

6. The method of any one of claims 2-5, wherein predicting a first lidar measurement value of the lidar return signal comprises:

accessing prediction data (620), wherein the prediction data comprises, for each emitted ray, and for each possible value $i$ of the index, one of:

a first lidar measurement value of a corresponding lidar return signal comprised in a first previous lidar data frame among the plurality of lidar data frames, the corresponding lidar return signal being associated with an index with the value = $i$; or
an indication of a missing value;

wherein upon the prediction data comprises an indication of a missing value for the emitted ray and the index with the value = $i$,

determining a predicted first lidar measurement value comprises determining the predicted first lidar measurement value using a first lidar measurement value of a return signal associated with an index with the value = $i$, previously encoded for the current lidar data frame, and

otherwise, determining a predicted first lidar measurement value comprises using the first lidar measurement value comprised in the prediction data for the emitted ray and the index with the value = $i$.

7. The method of claim 6, wherein the corresponding lidar return signal is resulting from a previously emitted ray having a corresponding elevation and azimuth angle as the emitted ray.

8. The method of any one of claims 6-7, for at least one emitted ray, and for at least one value of $i$, one or more intermediate lidar frames exist among the plurality of lidar data frames between the first previous lidar data frame and the current lidar data frame.

9. The method of any one of claims 1-8, wherein the plurality of rays are emitted in a same order along scanning lines ($302_{1...n}$) within each lidar data frame of the plurality of lidar data frames, wherein the method further comprises:

for each scanning line:

fitting the elevation angle and the azimuth angle of each ray of a first set of rays emitted along the scanning line to an estimated scanning line (304) y = kx+m, wherein y represents the elevation angle and x represents the azimuth angle,

determining a plurality of estimated sample points (306) along the estimated scanning line, each sample point estimating the elevation angle and the azimuth angle of an individual ray among the first set of rays;

encoding a position of each ray of the plurality of rays using the estimated scanning lines and the plurality of sample points of each scanning line.

10. The method of claim 9, wherein the encoding a position of each ray of the plurality of rays using the estimated scanning lines and the plurality of sample points of each scanning line are performed once for the plurality of lidar data frames.

11. The method of any one of claims 9-10, wherein the plurality of sample points of each of the estimated sample lines in combination forms an irregular grid; wherein encoding a first lidar measurement value associated with the first lidar return signal further comprises determining a first lidar measurement value to encode for the first lidar return signal by mapping the first ray (202b) and a neighbouring ray (202a, 202c) to the irregular grid and interpolating a respective first lidar measurement of a lidar return signal of the first ray and of the neighbouring ray based on the mapping.

12. A system (600) comprising:

one or more processors; and

one or more non-transitory computer-readable media storing computer executable instructions that, when executed by the one or more processors, cause the system to perform actions comprising:

encode a current lidar data frame of a plurality of lidar data frames, wherein the current lidar data frame comprises zero or more lidar return signals for each of a plurality of rays emitted at a respective elevation and azimuth angle by a lidar, wherein each lidar return signal results from an emitted ray is associated with an index having a value $i$, $1 \leq i \leq Y$, corresponding to a sequential order based on a time of arrival of lidar return signals of the emitted ray, wherein $Y$ represents the total number of possible lidar return signals for the emitted ray, wherein Y>1, wherein encoding comprises:

receive the current lidar data frame;

for each emitted ray, and for each possible value $i$ of the index:

check whether a first lidar return signal associated with an index with the value = $i$ was received for the emitted ray, and entropy encode an outcome of the check as a first entropy coded bit;

wherein encoding the first entropy coded bit comprises using a distinct context model for each possible value $i$ of the index.

13. A non-transitory computer-readable storage medium having stored thereon instructions for implementing the method according to any one of claims 1-9 when executed on one or more devices having processing capabilities.

14. A method for decoding a current encoded lidar data frame of a plurality of encoded lidar data frames (608), wherein the current encoded lidar data frame encodes Y lidar return signals resulting from each of a plurality of rays emitted at a respective elevation and azimuth angle by a lidar, wherein Y>1, wherein each encoded lidar return signal comprises a first entropy encoded bit, and being associated with an index having a value $i$, $1 \leq i \leq Y$ corresponding to a sequential order based on a time of arrival of lidar return signals of the emitted ray, wherein the method comprises the steps of:

receiving the encoded current lidar data frame;
for each emitted ray, and for each encoded lidar return signal:

identifying (S902) a context model to use for decoding the first entropy encoded bit, using the index $i$ associated with the encoded lidar return signal, wherein a distinct context model is identified for each possible value $i$ of the index;
determining whether a first lidar return signal with the sequential order of $i$ was received for the emitted ray by decoding (S904) the first entropy encoded bit using the identified context model.

15. The method of claim 14,

wherein, upon the first lidar return signal was received, the encoded lidar return signal comprises a second entropy encoded bit;
wherein the first lidar return is resulting from a first ray;
wherein the method further comprises determining a first lidar measurement value of the first lidar return signal by:

identifying (S910) a context model to use for decoding the second entropy encoded bit, using the index $i$ associated with the encoded lidar return signal, wherein a distinct context model is identified for each possible value $i$ of the index, wherein the context models used for decoding the second entropy bit are distinct from the context models used for decoding the first entropy bit;
decoding (S914) the second entropy encoded bit into a second bit using the identified context model;
determining (S912) a predicted first lidar measurement value using one of:

a decoded first lidar measurement value of a second decoded lidar return signal associated with an index with the value = $i$ in a previously decoded lidar data frame, or
a decoded first lidar measurement value of a third lidar return signal associated with an index with the value = $i$, previously decoded for the current encoded lidar data frame, wherein the third lidar return signal is resulting from an emitted ray different from the first ray;

upon the second bit having a first value:
setting the first lidar measurement to the predicted first lidar measurement;
upon the second bit having a second value:
decoding (S918) a residual from an entropy encoded value associated with the first encoded lidar return signal and setting the first lidar measurement to a combination of the predicted first lidar measurement and the decoded residual.

**Patentansprüche**

1. Verfahren zum Codieren eines aktuellen Lidar-Datenrahmens aus mehreren Lidar-Datenrahmen (206), wobei der aktuelle Lidar-Datenrahmen null oder mehr Lidar-Rücksignale (104) für jeden von mehreren Strahlen (102, 202) umfasst, die durch ein Lidar (100) bei einem jeweiligen Höhen- und Azimutwinkel emittiert werden, wobei jedes Lidar-Rücksignal, das aus einem emittierten Strahl resultiert, einem Index mit einem Wert $i$, $1 \leq i \leq Y$, entsprechend einer fortlaufenden Reihenfolge basierend auf einer Ankunftszeit von Lidar-Rücksignalen des emittierten Strahls zugeordnet ist, wobei Y > 1 ist, wobei Y die Gesamtzahl möglicher Lidar-Rücksignale für den emittierten Strahl repräsentiert, wobei das Verfahren die folgenden Schritte umfasst:

Empfangen des aktuellen Lidar-Datenrahmens;
für jeden emittierten Strahl und für jeden möglichen Wert i des Index:
Prüfen (S702), ob ein erstes Lidar-Rücksignal, das einem Index mit dem Wert = $i$ zugeordnet ist, für den emittierten Strahl empfangen wurde, und Entropiecodierung (S704) eines Ergebnisses der Prüfung als ein erstes entropiecodiertes Bit;
wobei das Codieren des ersten entropiecodierten Bits das Verwenden eines unterschiedlichen Kontextmodells für jeden möglichen Wert *i* des Index umfasst.

2. Verfahren nach Anspruch 1, wobei das erste Lidar-Rücksignal aus einem ersten Strahl resultiert, wobei das Verfahren ferner die folgenden Schritte umfasst:
nachdem das erste Lidar-Rücksignal empfangen wurde, Codieren eines ersten Lidar-Messwerts, der dem ersten Lidar-Rücksignal zugeordnet ist, durch Folgendes:

Bestimmen (S710) eines vorhergesagten ersten Lidar-Messwerts unter Verwendung eines des Folgenden:

eines ersten Lidar-Messwerts, der für ein zweites Lidar-Rücksignal codiert ist, das einem Index mit dem Wert = *i* zugeordnet ist, in einem vorhergehenden Lidar-Datenrahmen unter den mehreren Lidar-Datenrahmen, oder
eines ersten Lidar-Messwerts eines dritten Lidar-Rücksignals, das einem Index mit dem Wert = *i* zugeordnet ist, der zuvor für den aktuellen Lidar-Datenrahmen codiert wurde, wobei das dritte Lidar-Rücksignal für einen emittierten Strahl empfangen wurde, der sich vom ersten Strahl unterscheidet;

Prüfen (S712), ob eine quantisierte Differenz zwischen dem ersten Lidar-Messwert, der dem ersten Lidar-Rücksignal zugeordnet ist, und dem vorhergesagten ersten Lidar-Messwert gleich null ist, und Entropiecodierung (S714) eines Ergebnisses der Prüfung als ein zweites entropiecodiertes Bit; und,
wenn die quantisierte Differenz von null abweicht, Codieren (S716) der quantisierten Differenz als einen ersten entropiecodierten Wert.

3. Verfahren nach Anspruch 2, wobei das zweite Lidar-Rücksignal aus einem zuvor emittierten Strahl mit einem entsprechenden Höhen- und Azimutwinkel wie der erste Strahl resultiert.

4. Verfahren nach einem der Ansprüche 2-3, wobei das Codieren des zweiten entropiecodierten Bits das Verwenden eines unterschiedlichen Kontextmodells für jeden möglichen Wert *i* des Index umfasst, wobei sich die zum Codieren des zweiten Entropiebits verwendeten Kontextmodelle von den zum Codieren des ersten Entropiebits verwendeten Kontextmodellen unterscheiden.

5. Verfahren nach einem der Ansprüche 2-4, das ferner, nachdem das erste Lidar-Rücksignal empfangen wurde, das Codieren eines zweiten Lidar-Messwerts, der dem ersten Lidar-Rücksignal zugeordnet ist, durch Folgendes umfasst:

Bestimmen (S710) eines vorhergesagten zweiten Lidar-Messwerts unter Verwendung eines des Folgenden:

eines zweiten Lidar-Messwerts, der für ein viertes Lidar-Rücksignal codiert ist, das einem Index mit dem Wert = *i* zugeordnet ist, in einem vorhergehenden Lidar-Datenrahmen unter den mehreren Lidar-Datenrahmen; oder
eines zweiten Lidar-Messwerts eines fünften Lidar-Rücksignals, das einem Index mit dem Wert = *i* zugeordnet ist, der zuvor für den aktuellen Lidar-Datenrahmen codiert wurde, wobei das fünfte Lidar-Rücksignal für einen emittierten Strahl empfangen wurde, der sich vom ersten Strahl unterscheidet;

Prüfen (S712), ob eine zweite quantisierte Differenz zwischen dem zweiten Lidar-Messwert, der dem ersten Lidar-Rücksignal zugeordnet ist, und dem vorhergesagten zweiten Lidar-Messwert gleich null ist, und Entropiecodierung (S714) eines Ergebnisses der Prüfung als zweites entropiecodiertes Bit; und,
wenn die zweite quantisierte Differenz von null abweicht, Codieren (S716) der zweiten quantisierten Differenz als einen zweiten entropiecodierten Wert;
wobei das Codieren des dritten entropiecodierten Bits das Verwenden eines unterschiedlichen Kontextmodells für jeden möglichen Wert i des Index umfasst, wobei sich die zum Codieren des dritten Entropiebits verwendeten Kontextmodelle von den zum Codieren des ersten und zweiten Entropiebits verwendeten Kontextmodellen unterscheiden.

6. Verfahren nach einem der Ansprüche 2-5, wobei das Vorhersagen eines ersten Lidar-Messwerts des Lidar-Rücksignals Folgendes umfasst:

Zugreifen auf Vorhersagedaten (620), wobei die Vorhersagedaten für jeden emittierten Strahl und für jeden möglichen Wert *i* des Index eines des Folgenden umfassen:

einen ersten Lidar-Messwert eines entsprechenden Lidar-Rücksignals, das in einem ersten vorhergehenden Lidar-Datenrahmen unter den mehreren Lidar-Datenrahmen enthalten ist, wobei das entsprechende Lidar-Rücksignal einem Index mit dem Wert = *i* zugeordnet ist; oder
eine Angabe eines fehlenden Werts;

wobei, wenn die Vorhersagedaten für den emittierten Strahl und den Index mit dem Wert = *i* eine Angabe eines fehlenden Werts umfassen,
das Bestimmen eines vorhergesagten ersten Lidar-Messwerts das Bestimmen des vorhergesagten ersten Lidar-Messwerts unter Verwendung eines ersten Lidar-Messwerts eines Rücksignals umfasst, das einem Index mit dem Wert = *i* zugeordnet ist, der vorher für den aktuellen Lidar-Datenrahmen codiert wurde, während andernfalls das Bestimmen eines vorhergesagten ersten Lidar-Messwerts das Verwenden des ersten Lidar-Messwerts, der in den Vorhersagedaten für den emittierten Strahl und den Index mit dem Wert = *i* enthalten ist, umfasst.

7. Verfahren nach Anspruch 6, wobei das entsprechende Lidar-Rücksignal aus einem zuvor emittierten Strahl mit einem entsprechenden Höhen- und Azimutwinkel wie der emittierte Strahl resultiert.

8. Verfahren nach einem der Ansprüche 6-7, wobei für wenigstens einen emittierten Strahl und für wenigstens einen Wert von *i* ein oder mehrere Lidar-Zwischenrahmen zwischen den mehreren Lidar-Datenrahmen zwischen dem ersten vorhergehenden Lidar-Datenrahmen und dem aktuellen Lidar-Datenrahmen vorhanden sind.

9. Verfahren nach einem der Ansprüche 1-8, wobei die mehreren Strahlen in der gleichen Reihenfolge entlang der Abtastlinien ($302_1$, ..., $_n$) innerhalb jedes Lidar-Datenrahmens der mehreren Lidar-Datenrahmen emittiert werden, wobei das Verfahren ferner Folgendes umfasst:

für jede Abtastlinie:

Anpassen des Höhenwinkels und des Azimutwinkels jedes Strahls eines ersten Satzes von Strahlen, die entlang der Abtastlinie emittiert werden, an eine geschätzte Abtastlinie (304) y = kx + m, wobei y den Höhenwinkel repräsentiert und x den Azimutwinkel repräsentiert,
Bestimmen mehrerer geschätzter Abtastpunkte (306) entlang der geschätzten Abtastlinie, wobei jeder Abtastpunkt den Höhenwinkel und den Azimutwinkel eines einzelnen Strahls aus dem ersten Satz von Strahlen schätzt;

Codieren einer Position jedes Strahls der mehreren Strahlen unter Verwendung der geschätzten Abtastlinien und der mehreren Abtastpunkte jeder Abtastlinie.

10. Verfahren nach Anspruch 9, wobei das Codieren einer Position jedes Strahls der mehreren Strahlen unter Verwendung der geschätzten Abtastlinien und der mehreren Abtastpunkte jeder Abtastlinie einmal für die mehreren Lidar-Datenrahmen ausgeführt wird.

11. Verfahren nach einem der Ansprüche 9-10, wobei die mehreren Abtastpunkte jeder der geschätzten Abtastlinien in Kombination ein unregelmäßiges Gitter bilden; wobei das Codieren eines ersten Lidar-Messwerts, der dem ersten Lidar-Rücksignal zugeordnet ist, ferner das Bestimmen eines ersten zu codierenden Lidar-Messwerts für das erste Lidar-Rücksignal durch das Abbilden des ersten Strahls (202b) und eines benachbarten Strahls (202a, 202c) auf das unregelmäßige Gitter und das Interpolieren eines jeweiligen ersten Lidar-Messwerts eines Lidar-Rücksignals des ersten Strahls und des benachbarten Strahls basierend auf dem Abbilden umfasst.

12. System (600), das Folgendes umfasst:

einen oder mehrere Prozessoren; und
ein oder mehrere nicht transitorische computerlesbare Medien, die computerausführbare Anweisungen speichern, die, wenn sie durch den einen oder die mehreren Prozessoren ausgeführt werden, das System veranlassen, Vorgänge auszuführen, die Folgendes umfassen:
Codieren eines aktuellen Lidar-Datenrahmens aus mehreren Lidar-Datenrahmen, wobei der aktuelle Lidar-Datenrahmen null oder mehr Lidar-Rücksignale für jeden von mehreren Strahlen umfasst, die durch ein Lidar bei einem jeweiligen Höhen- und Azimutwinkel emittiert werden, wobei jedes Lidar-Rücksignal, das aus einem emittierten Strahl resultiert, einem Index mit einem Wert $i$, $1 \leq i \leq Y$, entsprechend einer fortlaufenden Reihenfolge basierend auf einer Ankunftszeit der Lidar-Rücksignale des emittierten Strahls zugeordnet ist, wobei $Y$ die Gesamtzahl möglicher Lidar-Rücksignale für den emittierten Strahl repräsentiert, wobei $Y > 1$ ist, wobei das Codieren Folgendes umfasst:

Empfangen des aktuellen Lidar-Datenrahmens;
für jeden emittierten Strahl und für jeden möglichen Wert $i$ des Index:
Prüfen, ob ein erstes Lidar-Rücksignal, das einem Index mit dem Wert = $i$ zugeordnet ist, für den emittierten Strahl empfangen wurde, und Entropiecodierung eines Ergebnisses der Prüfung als erstes entropiecodiertes Bit;
wobei das Codieren des ersten entropiecodierten Bits das Verwenden eines unterschiedlichen Kontextmodells für jeden möglichen Wert $i$ des Index umfasst.

13. Nicht transitorisches computerlesbares Speichermedium, das Anweisungen zum Implementieren des Verfahrens nach einem der Ansprüche 1-9, wenn sie auf einer Vorrichtung mit Verarbeitungsfähigkeiten ausgeführt werden, darin gespeichert aufweist.

14. Verfahren zum Decodieren eines aktuellen codierten Lidar-Datenrahmens mehrerer codierten Lidar-Datenrahmen (608), wobei der codierte aktuelle Lidar-Datenrahmen $Y$ Lidar-Rücksignale codiert, die aus jedem von mehreren Strahlen resultieren, die durch ein Lidar bei einem jeweiligen Höhen- und Azimutwinkel emittiert werden, wobei $Y > 1$ ist, wobei jedes codierte Lidar-Rücksignal ein erstes entropiecodiertes Bit umfasst und einem Index mit einem Wert $i$, $1 \leq i \leq Y$, zugeordnet ist, der einer fortlaufenden Reihenfolge basierend auf einer Ankunftszeit der Lidar-Rücksignale des emittierten Strahls entspricht, wobei das Verfahren die folgenden Schritte umfasst:

Empfangen des codierten aktuellen Lidar-Datenrahmens;
für jeden emittierten Strahl und für jedes codierte Lidar-Rücksignal:

Identifizieren (S902) eines Kontextmodells, das zum Decodieren des ersten entropiecodierten Bits zu verwenden ist, unter Verwendung des Index i, der dem codierten Lidar-Rücksignal zugeordnet ist, wobei für jeden möglichen Wert $i$ des Index ein unterschiedliches Kontextmodell identifiziert wird;
Bestimmen, ob ein erstes Lidar-Rücksignal mit der fortlaufenden Reihenfolge von $i$ für den emittierten Strahl empfangen wurde, durch das Decodieren (S904) des ersten entropiecodierten Bits unter Verwendung des identifizierten Kontextmodells.

15. Verfahren nach Anspruch 14,

wobei, wenn das erste codierte Lidar-Rücksignal empfangen wurde, das codierte Lidar-Rücksignal ein zweites entropiecodiertes Bit umfasst;
wobei der erste Lidar-Rücksignal aus einem ersten Strahl resultiert;
wobei das Verfahren ferner das Bestimmen eines ersten Lidar-Messwerts des ersten Lidar-Rücksignals durch Folgendes umfasst:

Identifizieren (S910) eines Kontextmodells, das zum Decodieren des zweiten entropiecodierten Bits zu verwenden ist, unter Verwendung des Index $i$, der dem codierten Lidar-Rücksignal zugeordnet ist, wobei für jeden möglichen Wert $i$ des Index ein unterschiedliches Kontextmodell identifiziert wird, wobei sich die zum Decodieren des zweiten Entropiebits verwendeten Kontextmodelle von den zum Decodieren des ersten Entropiebits verwendeten Kontextmodellen unterscheiden;
Decodieren (S914) des zweiten entropiecodierten Bits in ein zweites Bit unter Verwendung des identifizierten Kontextmodells;
Bestimmen (S912) eines vorhergesagten ersten Lidar-Messwerts unter Verwendung eines des Folgenden:

eines decodierten ersten Lidar-Messwerts eines zweiten decodierten Lidar-Rücksignals, das einem Index mit dem Wert = $i$ zugeordnet ist, in einem zuvor decodierten Lidar-Datenrahmen, oder
eines decodierten ersten Lidar-Messwerts eines dritten Lidar-Rücksignals, das einem Index mit dem Wert = $i$ zugeordnet ist, der zuvor für den aktuell codierten Lidar-Datenrahmen decodiert wurde, wobei das dritte Lidar-Rücksignal aus einem emittierten Strahl resultiert, der sich vom ersten Strahl unterscheidet;

wenn das zweite Bit einen ersten Wert aufweist:
Setzen des ersten Lidar-Messwerts auf den vorhergesagten ersten Lidar-Messwert;
wenn das zweite Bit einen zweiten Wert aufweist:
Decodieren (S918) eines Rests von einem entropiecodierten Wert, der dem ersten codierten Lidar-Rücksignal zugeordnet ist, und Setzen des ersten Lidar-Messwerts auf eine Kombination aus dem vorhergesagten ersten Lidar-Messwert und dem decodierten Rest.

## Revendications

1. Procédé de codage d'une trame de données lidar courante d'une pluralité de trames de données lidar (206), dans lequel la trame de données lidar courante comprend zéro ou plusieurs signaux de retour lidar (104) pour chacun d'une pluralité de rayons (102, 202) émis à un angle d'élévation et d'azimut respectif par un lidar (100), dans lequel chaque signal de retour lidar résultant d'un rayon émis est associé à un index ayant une valeur i, $1 \leq i \leq Y$, correspondant à un ordre séquentiel basé sur un temps d'arrivée des signaux de retour lidar du rayon émis, où Y>1, où Y représente le nombre total de signaux de retour lidar possibles pour le rayon émis, le procédé comprenant l'étape suivante :

   recevoir la trame de données lidar courante ;
   pour chaque rayon émis et pour chaque valeur i possible de l'index :

   vérifier (S702) si un premier signal de retour lidar associé à un index ayant pour valeur i a été reçu pour le rayon émis, et effectuer un codage entropique (S704) d'un résultat de la vérification en tant que premier bit codé entropiquement ;
   où le codage du premier bit codé entropiquement comprend l'utilisation d'un modèle de contexte distinct pour chaque valeur i possible de l'index.

2. Procédé selon la revendication 1, dans lequel le premier signal de retour lidar résulte d'un premier rayon, le procédé comprenant en outre les étapes suivantes :

   lors de la réception du premier signal de retour lidar,
   coder d'une première valeur de mesure lidar associée au premier signal de retour lidar en :
   déterminant (S710) une première valeur de mesure prédite du lidar à l'aide de l'une des valeurs suivantes :

   une première valeur de mesure lidar codée pour un deuxième signal de retour lidar associé à un index ayant la valeur i dans une trame de données lidar précédente parmi la pluralité de trames de données lidar, ou une première valeur de mesure lidar d'un troisième signal de retour lidar associé à un index de valeur i, préalablement codé pour la trame de données lidar courante, le troisième signal de retour lidar étant reçu pour un rayon émis différent du premier rayon ;
   vérifier (S712) si une différence quantifiée entre la première valeur de mesure lidar associée au premier signal de retour lidar et la première valeur de mesure lidar prédite est égale à zéro, et effectuer un codage entropique (S714) d'un résultat de la vérification en tant que deuxième bit codé entropiquement ; et lorsque la différence quantifiée s'écarte de zéro, coder (S716) la différence quantifiée en tant que première valeur codée entropiquement.

3. Procédé selon la revendication 2, dans lequel le deuxième signal de retour lidar résulte d'un rayon précédemment émis ayant un angle d'élévation et d'azimut correspondant en tant que premier rayon.

4. Procédé selon l'une quelconque des revendications 2 et 3, dans lequel le codage du deuxième bit codé entropiquement comprend l'utilisation d'un modèle de contexte distinct pour chaque valeur possible i de l'index, où les modèles de contexte utilisés pour coder le deuxième bit entropiquement sont distincts des modèles de contexte utilisés pour coder le premier bit entropiquement.

5. Procédé selon l'une quelconque des revendications 2 à 4, comprenant en outre, lorsque le premier signal de retour lidar a été reçu, le codage d'une deuxième valeur de mesure lidar associée au premier signal de retour lidar en : déterminant (S710) une deuxième valeur de mesure prédite du lidar à l'aide de l'une des valeurs suivantes :

une deuxième valeur de mesure lidar codée pour un quatrième signal de retour lidar associé à un index ayant la valeur i dans une trame de données lidar précédente parmi la pluralité de trames de données lidar, ou
une deuxième valeur de mesure lidar d'un cinquième signal de retour lidar associé à un index de valeur i, préalablement codé pour la trame de données lidar courante, le cinquième signal de retour lidar étant reçu pour un rayon émis différent du premier rayon ;
vérifier (S712) si une deuxième différence quantifiée entre la deuxième valeur de mesure lidar associée au premier signal de retour lidar et la deuxième valeur de mesure lidar prédite est égale à zéro, et effectuer un codage entropique (S714) d'un résultat de la vérification en tant que troisième bit codé entropiquement ; et
lorsque la deuxième différence quantifiée s'écarte de zéro, coder (S716) la deuxième différence quantifiée en tant que deuxième valeur codée entropiquement ;
où le codage du troisième bit codé entropiquement comprend l'utilisation d'un modèle de contexte distinct pour chaque valeur i possible de l'index, les modèles de contexte utilisés pour coder le troisième bit entropiquement étant distincts des modèles de contexte utilisés pour coder entropiquement le premier bit et le deuxième bit.

6. Procédé selon l'une quelconque des revendications 2 à 5, dans lequel la prédiction d'une première valeur de mesure lidar du signal de retour lidar comprend les étapes suivantes :
accéder à des données de prédiction (620), les données de prédiction comprenant, pour chaque rayon émis, et pour chaque valeur possible i de l'index, l'une des valeurs suivantes :

une première valeur de mesure lidar d'un signal de retour lidar correspondant compris dans une première trame de données lidar précédente parmi la pluralité de trames de données lidar, le signal de retour lidar correspondant étant associé à un index ayant la valeur i ; ou
une indication d'une valeur manquante ;
où, lors de la prédiction, les données comprennent une indication d'une valeur manquante pour le rayon émis et l'index ayant la valeur i,
la détermination d'une première valeur de mesure lidar prédite comprend de déterminer la première valeur de mesure lidar prédite au moyen d'une première valeur de mesure lidar d'un signal de retour associé à un index ayant la valeur i, préalablement codé pour la trame de données lidar courante, et
sinon, la détermination d'une première valeur de mesure lidar prédite comprend d'utiliser la première valeur de mesure lidar comprise dans les données de prédiction pour le rayon émis et l'index ayant la valeur i.

7. Procédé selon la revendication 6, dans lequel le signal de retour lidar correspondant résulte d'un rayon précédemment émis ayant un angle d'élévation et d'azimut correspondant en tant que rayon émis.

8. Procédé selon l'une quelconque des revendications 6 et 7, dans lequel, pour au moins un rayon émis, et pour au moins une valeur de i, une ou plusieurs trames lidar intermédiaires existent parmi la pluralité de trames de données lidar entre la première trame de données lidar précédente et la trame de données lidar courante.

9. Procédé selon l'une quelconque des revendications 1 à 8, dans lequel la pluralité de rayons sont émis dans le même ordre le long de lignes de balayage ($302_{1...n}$) à l'intérieur de chaque trame de données lidar de la pluralité de trames de données lidar, où le procédé comprend en outre les étapes suivantes :
pour chaque ligne de balayage :

ajuster l'angle d'élévation et l'angle d'azimut de chaque rayon d'un premier ensemble de rayons émis le long de la ligne de balayage à une ligne de balayage estimée (304) $y = kx+m$, où y représente l'angle d'élévation et x l'angle d'azimut,
déterminer une pluralité de points d'échantillonnage estimés (306) le long de la ligne de balayage estimée, chaque point d'échantillonnage estimant l'angle d'élévation et l'angle d'azimut d'un rayon individuel parmi le premier ensemble de rayons ;
coder une position de chaque rayon de la pluralité de rayons au moyen des lignes de balayage estimées et de la pluralité de points d'échantillonnage de chaque ligne de balayage.

10. Procédé selon la revendication 9, dans lequel le codage d'une position de chaque rayon de la pluralité de rayons en utilisant les lignes de balayage estimées et la pluralité de points d'échantillonnage de chaque ligne de balayage est effectué une fois pour la pluralité de trames de données lidar.

11. Procédé selon l'une quelconque des revendications 9 et 10, dans lequel la pluralité de points d'échantillonnage de chacune des lignes d'échantillonnage estimées forment, en combinaison, une grille irrégulière ; où le codage d'une première valeur de mesure lidar associée au premier signal de retour lidar comprend en outre la détermination d'une première valeur de mesure lidar pour coder le premier signal de retour lidar en mappant le premier rayon (202b) et un rayon voisin (202a, 202c) sur la grille irrégulière et en interpolant une première mesure lidar respective d'un signal de retour lidar du premier rayon et du rayon voisin sur la base du mappage.

12. Système (600) comprenant :

un ou plusieurs processeurs ; et

un ou plusieurs supports non transitoires lisibles par ordinateur stockant des instructions exécutables par ordinateur qui, lorsqu'elles sont exécutées par les un ou plusieurs processeurs, amènent le système à exécuter des actions comprenant les étapes suivantes :

coder une trame de données lidar courante d'une pluralité de trames de données lidar, où la trame de données lidar courante comprend zéro ou plusieurs signaux de retour lidar pour chacun d'une pluralité de rayons émis à un angle d'élévation et d'azimut respectif par un lidar, où chaque signal de retour lidar résultant d'un rayon émis est associé à un index ayant une valeur i, $1 \leq i \leq Y$, correspondant à un ordre séquentiel basé sur un temps d'arrivée des signaux de retour lidar du rayon émis, où Y représente le nombre total de signaux de retour lidar possibles pour le rayon émis, où Y>1, le codage comprenant l'étape suivante :

recevoir la trame de données lidar courante ;

pour chaque rayon émis et pour chaque valeur i possible de l'index :

vérifier si un premier signal de retour lidar associé à un index ayant pour valeur i a été reçu pour le rayon émis, et effectuer un codage entropique d'un résultat de la vérification en tant que premier bit codé entropiquement ;

où le codage du premier bit codé entropiquement comprend l'utilisation d'un modèle de contexte distinct pour chaque valeur i possible de l'index.

13. Support de stockage non transitoire lisible par ordinateur ayant, stockées sur celui-ci, des instructions pour mettre en œuvre le procédé selon l'une quelconque des revendications 1 à 9 lorsqu'elles sont exécutées sur un ou plusieurs dispositifs ayant des capacités de traitement.

14. Procédé de décodage d'une trame de données lidar codée courante d'une pluralité de trames de données lidar codées (608), dans lequel la trame de données lidar codée courante code Y signaux de retour lidar résultant de chacun d'une pluralité de rayons émis à un angle d'élévation et d'azimut respectif par un lidar, où Y>1, chaque signal de retour lidar codé comprenant un premier bit codé entropiquement, et étant associé à un index ayant une valeur i, $1 \leq i \leq Y$ correspondant à un ordre séquentiel basé sur un temps d'arrivée des signaux de retour lidar du rayon émis, où le procédé comprend les étapes suivantes :

recevoir la trame de données lidar courante codée ;

pour chaque rayon émis, et pour chaque signal de retour lidar codé :

identifier (S902) un modèle de contexte à utiliser pour décoder le premier bit codé entropiquement, en utilisant l'index i associé au signal de retour lidar codé, un modèle de contexte distinct étant identifié pour chaque valeur i possible de l'index ;

déterminer si un premier signal de retour lidar d'ordre séquentiel i a été reçu pour le rayon émis par décodage (S904) du premier bit codé entropiquement au moyen du modèle de contexte identifié.

15. Procédé selon la revendication 14,

dans lequel, à la réception du premier signal de retour lidar, le signal de retour lidar codé comprend un deuxième bit codé entropiquement ;

où le premier retour lidar résulte d'un premier rayon ; où le procédé comprend en outre de déterminer une première valeur de mesure lidar du premier signal de retour lidar en exécutant les étapes suivantes :

identifier (S910) un modèle de contexte à utiliser pour décoder le deuxième bit codé entropiquement, en utilisant l'index i associé au signal lidar de retour codé, où un modèle de contexte distinct est identifié pour chaque valeur i possible de l'index, où les modèles de contexte utilisés pour décoder le deuxième bit entropique sont distincts des modèles de contexte utilisés pour décoder le premier bit entropique ;

décoder (S914) le deuxième bit codé entropiquement en un deuxième bit au moyen du modèle de contexte identifié ; déterminer (S912) une première valeur de mesure prévue du lidar à l'aide de l'une des valeurs suivantes :

une première valeur de mesure lidar décodée d'un deuxième signal de retour lidar décodé associé à un index ayant la valeur i dans une trame de données lidar décodée précédemment, or
une première valeur de mesure lidar décodée d'un troisième signal de retour lidar associé à un index ayant la valeur i, préalablement décodée pour la trame de données lidar codée courante, où le troisième signal de retour lidar résulte d'un rayon émis différent du premier rayon ;
lorsque le deuxième bit a une première valeur :

attribuer à la première mesure lidar la valeur de la première mesure lidar prédite ;
lorsque le deuxième bit a une deuxième valeur :
décoder (S918) un écart résiduel à partir d'une valeur codée entropiquement associée au premier signal de retour lidar codé, et attribuer à la première mesure lidar une combinaison de la valeur de la première mesure lidar prédite et de l'écart résiduel décodé.

Fig. 1

Fig. 2

10111111011111101011111 } 402

10101011010110101011010 } 404

00101001010000101011000 } 406

## Fig. 3

206

600

| | 602 Encoding data determining component |
| 620 | |
| 622 | 604 Entropy encoding component |

608

## Fig. 4

**S702**
Checking whether a lidar return signal associated with an index with the value = *i* was received for an emitted ray

**S704**
Entropy encoding an outcome of the check as an entropy coded bit using a distinct context model for *i*

**S708**
Lidar return signal received?

No

Yes

**S710**
Determining a predicted lidar measurement value for a lidar measurement value associated with the lidar return signal

**S712**
Checking if prediction is correct.

**S714**
Entropy encoding an outcome of the check as an entropy coded bit using a distinct context model for *i*

**S716**
Entropy encoding any residual

Yes

**S718**
More lidar measurment values to encode?

No

**S720**
END

Fig. 5

Fig. 6

Fig. 7

608

820

802
Entropy decoding
component

800

808

822

804
Decoding data
determining component

Fig. 8

S902
Identifying a context model to use for decoding a first entropy encoded bit,
wherein a distinct context model is identified for each possible value *i*

S904
Entropy decoding the first entropy encoded bit to determine whether a lidar
return signal with the sequential order of *i* was received

S908
Lidar return signal received?                    No

Yes

S910
Identifying a context model to use for decoding a second (third, etc) entropy
encoded bit, wherein a distinct context model is identified for each possible
value *i*

S912
Determining a predicted lidar measurement value for a lidar measurement value
associated with the lidar return signal

S914
Entropy decoding the second (third, etc.) entropy encoded bit to determine
whether the prediction is correct

S916
Is prediction correct?                    Yes

No

S918
Entropy decoding a residual and add to the predicted lidar measurement value

Yes                    S920
More lidar measurment values to decode?                    No

Fig. 9

S922
END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021207431 A